(19) Europäisches Patentamt / European Patent Office / Office européen des brevets

(11) **EP 4 490 493 B1**

(12) **EUROPEAN PATENT SPECIFICATION**

(45) Date of publication and mention
of the grant of the patent:
**29.07.2026 Bulletin 2026/31**

(21) Application number: **23711937.5**

(22) Date of filing: **10.03.2023**

(51) International Patent Classification (IPC):
*G01N 21/19* (2006.01)    *G01N 21/21* (2006.01)
*G01N 21/35* (2014.01)    G01N 21/3577 (2014.01)
G01N 21/3504 (2014.01)    G01N 21/3563 (2014.01)

(52) Cooperative Patent Classification (CPC):
**G01N 21/19; G01N 21/21; G01N 21/35;**
G01N 21/3504; G01N 21/3563; G01N 21/3577;
G01N 2021/216; G01N 2021/399

(86) International application number:
**PCT/AT2023/060068**

(87) International publication number:
**WO 2023/168476 (14.09.2023 Gazette 2023/37)**

(54) **METHOD AND DEVICE FOR VCD ANALYSIS OF AN ANALYTE**

VERFAHREN UND VORRICHTUNG ZUR VCD-ANALYSE EINES ANALYTS

PROCÉDÉ ET DISPOSITIF D'ANALYSE PAR DICHROÏSME CIRCULAIRE VIBRATIONNEL D'UN ANALYTE

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR

(30) Priority: **11.03.2022 AT 501572022**

(43) Date of publication of application:
**15.01.2025 Bulletin 2025/03**

(73) Proprietor: **TECHNISCHE UNIVERSITÄT WIEN**
**1040 Wien (AT)**

(72) Inventors:
• **LENDL, Bernhard**
**1160 Wien (AT)**
• **RAMER, Georg**
**2345 Brunn am Gebirge (AT)**
• **HERMANN, Daniel-Ralph**
**1090 Wien (AT)**

(74) Representative: **SONN Patentanwälte GmbH & Co KG**
**Riemergasse 14**
**1010 Wien (AT)**

(56) References cited:
**JP-A- 2007 101 280**    **US-A1- 2003 202 179**
**US-A1- 2021 247 307**

• **HERMANN DANIEL R. ET AL: "Quantum Cascade Laser-Based Vibrational Circular Dichroism Augmented by a Balanced Detection Scheme", ANALYTICAL CHEMISTRY, vol. 94, no. 29, 14 July 2022 (2022-07-14), US, pages 10384 - 10390, XP093038905, ISSN: 0003-2700, Retrieved from the Internet <URL:https://pubs.acs.org/doi/pdf/10.1021/acs.analchem.2c01269> DOI: 10.1021/acs.analchem.2c01269**

**Description**

The invention concerns a method and a device for vibrational circular dichroism analysis of an analyte.

Circular dichroism (CD) spectroscopy refers to the differential absorbance of light and right circular polarised light by a sample. It can therefore be used to study stereochemical relevant molecules in solution. A subfield of this research area is Vibrational Circular Dichroism (VCD), which deals with vibrational transitions, most commonly in the mid infrared region (MIR). This region is rich in bands characteristic for organic molecular bonds, enabling its broad application for stereochemistry and biological studies. In the IR region, the observed absorption differences typically range between $10^{-4}$ and $10^{-6}$. Furthermore, many solvents strongly absorb in the region of interest reducing the spectral throughput and necessitating the use of very short optical path lengths in conventional MIR absorption spectroscopy. These characteristics constitute significant drawbacks, as weak signals are to be detected among comparatively high noise levels. Commercial instruments, which are mostly based on Fourier-transform Infrared spectrometers (FT-IR), rely on the averaging of repeated scans to achieve acceptable signal noise ratios in VCD measurements allowing for appropriate interpretation of the spectra, often leading to measurement times of several hours per sample.

This drawback motivated constant improvement in the interferometer design as well as the general VCD instrumentation resulting in decreasing noise levels and artefact reduction. In the case of VCD instrumentation, careful optical design and polarization modulation schemes enabled suppression of artefacts (see Nafie, L. A. Dual Polarization Modulation: A Real-Time, Spectral-Multiplex Separation of Circular Dichroism from Linear Birefringence Spectral Intensities. Appl. Spectrosc. 2000, 54 (11), 1634-1645).

Concurrently, mid-IR spectroscopy in general has seen great improvements with regards to sensitivity through the use of novel tuneable laser light sources. Here, in particular, the advent of brilliant external cavity quantum cascade lasers has enabled to use of longer optical pathlengths and resulted in higher sensitivity and lower limits of detection (see:

Akhgar, C. K.; Ramer, G.; Žbik, M.; Trajnerowicz, A.; Pawluczyk, J.; Schwaighofer, A.; Lendl, B. The Next Generation of IR Spectroscopy: EC-QCL-Based Mid-IR Transmission Spectroscopy of Proteins with Balanced Detection. Anal. Chem. 2020, 92 (14), 9901-9907). A logical step was to combine quantum cascade lasers (QCL) with a VCD setup. S. Lüdeke, M. Pfeifer and P. Fischer, J. Am. Chem. Soc., 2011, 133, 5704-5707 compared a custom made QCL based setup with a commercial FTIR-VCD instrument, demonstrating the suitability of QCLs for VCD.

Mid-Infrared lasers, such as QCLs offer a highly brilliant and polarised radiation, enabling longer pathlengths even with strongly absorbing solvents like water, resulting in higher sample absorbance and easier sample handling. However, they introduce additional noise into the system that is not present in classical thermal light sources. Noise in laser sources can take the form of pulse to pulse fluctuations, intensity drifts, spectral mismatch through imperfect grating movements and low frequency noise, which have a negative impact on the results of VCD. Therefore, a reduction of measurement time compared to FTIR systems with unchanged noise levels has not been satisfactory achieved.

Further, M. Bonmarin and J. Helbing, "A picosecond time-resolved vibrational circular dichroism spectrometer," Opt. Lett. 33, 2086-2088 (2008) shows a VCD system, where an infrared laser pulse is split by a beam splitter. One beam is modulated by a photoelastic modulator and directed through a sample. Both beams are detected. However, since the reference beam does not pass through a reference, this scheme does not allow precise cancellation of noise. In this way, absorbance effects arising from the solvent as well as polarization dependent beam splitting artefacts are not corrected. Further, only every 50th cycle of the photoelastic modulator is used.

Further, US 2021/0247307 A1 shows a VCD spectroscopy method using a dual frequency comb. US 2003/202179 A1 concerns a spectrophotometry method and JP 2007 101280 A concerns a system for measuring circular dichroism.

It is an objective of the present invention to alleviate or resolve one or more of the drawbacks of the state of the art. In particular, it is an objective of the present invention to provide a VCD method and device with reduced noise and/or higher time resolution (i.e. more measurements per unit of time).

This is achieved by a method for vibrational circular dichroism analysis of an analyte, comprising the steps:

    a) generating a laser beam at a wavelength preferably in the infrared region;
    b) splitting the laser beam into a sample beam and a reference beam;
    c) modulating the polarization of the sample beam;
    d) interacting of the sample beam with a sample;
    e) interacting of the reference beam with a reference;
    f) measuring the intensity of the sample beam to obtain a sample signal;
    g) measuring the intensity of the reference beam to obtain a reference signal;
    h) subtracting the sample signal and the reference signal to obtain a difference signal;
    i) recovering a polarization dependent intensity change introduced by the analyte from the difference signal.

Further, this is achieved by a device for vibrational circular dichroism analysis of an analyte, comprising:

- a laser light source for providing a laser beam;
- a beam splitter for splitting the laser beam into a sample beam and a reference beam;
- a modulator for modulating the polarization of the sample beam;
- a sample cell for interaction of the sample beam with a sample comprising the analyte;
- a reference cell for interaction of the reference beam with a reference;
- a sample detector for detecting the sample beam and obtaining a sample beam signal corresponding to an intensity of the sample beam;
- a reference detector for detecting the reference beam and obtaining a reference signal corresponding to an intensity of the reference beam;
- a subtractor for forming a difference signal of the sample signal and the reference signal for recovering a polarization dependent intensity change introduced by the analyte from the difference signal.

Through the implementation of a laser light source coupled with a balanced detection scheme (i.e. splitting the laser beam into a sample beam and a reference beam and measuring them as well as determining their difference), the high brilliance of laser sources can be leveraged without introducing additional noise into the system, since fluctuations can be compensated by measuring the reference beam and subtracting the signal of the sample beam and the reference beam (i.e. the sample signal and the reference signal). This enables low noise measurements with significantly higher time resolution and potentially opens new applications of VCD spectroscopy, in particular for biopharmaceutical applications.

The laser light source preferably comprises a (in particular tuneable) semiconductor laser. The laser light source preferably comprises a quantum cascade laser (QCL), in particular an external cavity QCL. Optionally, the laser light source comprises an interband cascade laser (ICL). The laser beam is preferably pulsed. The sample detector and the reference detector each preferably comprise a HgCdTe detector (i.e. an MCT detector). Optionally, the device comprises a balanced detector, wherein the balanced detector comprises the sample detector, the reference detector and the subtractor. Optionally, the balanced module has a first output for the reference signal, a second output for the sample signal and a third output for the difference signal (which may also be referred to as a balanced signal). Optionally, the sample detector and/or the reference detector is/are outfitted with dark current compensation.

The sample beam is in particular modulated such that the sample beam comprises a change in its degree of circular polarization. The sample beam is in particular modulated in such a way that it exhibits states of linear, elliptical and/or circular polarization. Optionally, the sample beam is modulated according to a modulation cycle, wherein the sample beam is modulated such that it has a circular polarization at a maximum and at a minimum of the modulation cycle. The modulator may be set to achieve quarter wave retardation at a specific wavenumber (e.g. at 1666.67 cm$^{-1}$, i.e. 6 $\mu$m), in particular at the laser beam's wavenumber and in particular at a maximum and a minimum of the modulator's modulation cycle. Optionally, the modulator is adjusted during the measurement (e.g., to achieve quarter wave retardation at several different wavelengths, in particular at a maximum and a minimum in the modulation cycle). Optionally, the sample comprises a solvent. Optionally, the reference comprises a solvent. Preferably, the sample and the reference comprise the same solvent. Optionally, both the sample and the reference comprise a solid sample (i.e.,a pure solid substance or a mixture of solids, such as a pellet of KBr and an analyte). Optionally, the sample and reference comprise a gas (i.e., a pure gas or a mixture of gas, comprising an analyte in a matrix gas). Optionally, only the sample comprises the analyte (i.e. optionally, the reference does not comprise the analyte). The setup may be encompassed in a housing and/or may be (constantly) purged with dry air, to prevent the interference from water vapour during the spectra acquisition. In particular, the method and the device are for vibrational circular dichroism spectroscopy of an analyte.

The infrared region is defined as a wavelength between 0.75 $\mu$m and 1,000 $\mu$m. Optionally, in step a) the laser beam is generated at a wavelength in the mid-infrared region, which is defined as a wavelength between 2.5 $\mu$m and 50 $\mu$m. The beam splitter provides a transmitted beam and a reflected beam, one of which is used as the sample beam and the other one as the reference beam. The beam splitter is preferably a 50/50 beam splitter. The sample beam is in particular directed at the sample cell, or more particularly, through the modulator and the sample cell at the sample detector, and the reference beam is in particular directed at the reference cell, or more particularly, through the reference cell at the reference detector. The sample cell and/or the reference cell are preferably temperature stabilized. The subtractor may be an analog subtractor.

The method comprises the step:

i) recovering a sample beam polarization dependent intensity change from the difference signal.

Optionally, the method further comprises the step:

c1) modulating the polarization of the reference beam (6b). Optionally, step c1) is performed substantially simultaneously to step c).

Optionally, the polarization dependent intensity change is due to a difference in absorption of left-handed and right-handed circular polarized light in the sample or analyte.

Optionally, an intensity signal is calculated from the difference signal, and the reference signal and/or the sample signal.

Optionally, the method comprises using the intensity signal to scale the polarization dependent intensity change.

The steps a) to h), preferably the steps a) to i) (or a) to j) mentioned below), and further steps mentioned herein may be conducted in any order and/or more than one of the steps may be conducted simultaneously. Preferably, step c) is conducted prior to step d).

Optionally, the laser beam is generated in pulses with a laser repetition frequency (i.e. laser pulse frequency) and wherein the sample beam is modulated by a modulator, which imposes a change in the polarization periodically oscillating according to a modulator frequency, wherein optionally the laser repetition frequency is equal to or larger than the modulator frequency. The change in the polarization (i.e. the optical retardation) that the modulator imposes on a beam that passes through it oscillates with the modulator frequency. Therein, each period of the periodically oscillating change in the polarization comprises a maximum and a minimum (i.e. a maximum of negative retardation) of change in polarization (i.e. imposed retardation). Optionally, the maxima and minima comprise left-handed and right-handed circular polarization, respectively. I.e., the sample beam is modulated by a modulator, which operates in modulation cycles imposing periodically oscillating change in the polarization (i.e. optical retardation), wherein each modulation cycle includes a maximum and a minimum, where at least one pulse of the laser beam is generated in every one of the modulation cycles. The laser repetition frequency is the frequency of pulse generation by the laser light source. Optionally, the laser repetition frequency is at least two times the modulator frequency. Thus, one laser pulse can be generated for every minimum and maximum of change of polarization (i.e. retardation) imposed by the modulator. Optionally, pulses are generated at specific time points during the modulator cycle to coincide with specified changes in polarization (i.e. retardations). Optionally, the specified changes in polarization (i.e. retardations) are the maximum and minimum change in polarization (i.e. retardation). Optionally, these specified changes in polarization (i.e. retardations) correspond to specific resulting polarization states, e.g., maximally left-handed and right-handed circular polarized and/or linear polarized states.

Optionally, the laser repetition frequency is at least four times higher than the modulator frequency. Optionally, the laser has a high duty cycle (e.g., > 10%) to provide a high signal in particular when used in combination with a lock-in amplifier. The value of imposed retardation defines the change in polarization of the laser beam.

Optionally, the reference signal and the difference signal (also labelled balanced signal) are collected at the laser repetition frequency and/or the modulator frequency. The information used for VCD measurements is contained in particular in the modulator frequency component. In particular, the difference signal contains all information present in the sample signal, without the noise present. The reference signal is in particular collected to be used as an offset for the difference signal collected at the laser frequency. This ensures that the single channel intensity signal can be recovered correctly. Alternatively, the reference signal and the difference signal are collected (and, in particular, digitized) with an appropriate resolution and speed, in particular with at least one sampling point collected for each laser pulse, preferably at least 3 or at least 5 sampling points collected for each laser pulse. Optionally, the signal can be averaged for part of the duration of a pulse or the full duration of the pulse. In particular, a VCD spectrum is determined from the recorded pulses taking into account the modulator amplitude, modulator phase and/or the retardation induced by the modulator. Optionally, this can be implemented using a lock-in detector, or digital signal processing, or a field-programmable gate array (FPGA).

Optionally, each period of the periodically oscillating change in the polarization (i.e. optical retardation) imposed by the modulator comprises a maximum and a minimum of imposed change in the polarization (i.e. retardation) the pulses of the laser beam are generated at specific times during the periodic oscillation of the modulator (i.e. at specific times during the modulation cycle). Optionally, the specific times are chosen to coincide with the maximum and minimum of imposed change in the polarization. Optionally, the specific times are chosen to coincide with an imposed maximally circular polarization and/or an imposed maximally linear polarization. Optionally, one pulse of the laser beam is generated for each maximum of imposed retardation and one pulse of the laser beam is generated for each minimum of imposed retardation. Optionally, the laser repetition frequency is synchronized to the modulator frequency in a way so that the laser operates at the second harmonic of the modulator frequency. A delay between the laser pulses and the modulator cycles is then adjusted so that the laser pulses are transmitted through the modulator when its change in polarization (i.e. retardation) corresponds to maximally circular polarized light. This enables the usage of the full laser power for each "perfect" circular polarization state (wherein "perfect" refers to fully right-handed and fully left-handed circular polarization state). Further, this scheme is also helpful if 100% circular polarization is not reached. Also, this scheme is useful if an adjustment of the modulator's amplitude should be avoided but the linear polarization should still be minimized. In this case, the maximum retardation (i.e. the modulator's amplitude) is set (high enough) such that circular polarization is reached for every wavelength that is to be measured. This means that for some wavelengths the maximum retardation may already be going beyond circular polarization back to linear polarization in the other direction. In this case the pulses may be shifted so that they do not coincide with the maximum and minimum of imposed change in the polarization, but rather that they coincide to a fractional value (e.g. more than 50% but less than 100%) of the maximum and minimum. Optionally, the reference signal is collected at double the modulator frequency (i.e., in one variant, the laser repetition frequency) and the difference signal is collected at the modulator frequency and at double the modulator frequency. This is advantageous, because the difference signal in particular carries the information present in the sample channel, i.e. in this case the VCD signal, while the reference signal only needs to be collected at the laser frequency, since it in particular only carries information about the intensity of the laser.

Optionally, the method further comprises the step:

j) transmitting the reference signal and the difference signal to a data acquisition unit and referencing the reference signal and the difference signal to the laser repetition frequency and/or the modulator frequency. Referencing the reference signal and the difference signal to the laser repetition frequency and/or the modulator frequency refers to demodulating the reference signal and the difference signal at the laser repetition frequency and/or the modulator frequency. Optionally, the intensity of the sample beam and the intensity of the reference beam are measured repeatedly and synchronized with the laser repetition frequency and/or with the modulator frequency.

Optionally, the method comprises, prior to interacting the sample beam with the sample and preferably prior to modulating the sample beam, reducing the beam diameter of the sample beam with a telescope system. The telescope system optionally comprises a Galilean telescope. Under Galilean telescope is understood that the system comprises a converging (in particular plano-convex or convex-convex) lens and a diverging (in particular plano-concave) lens. Optionally, the beam diameter of the sample beam is reduced to less than 5 mm, further optionally to less than 2 mm, further optionally to less than 1 mm (at the sample detector). The reduced beam is in particular directed to a tilted photoelastic modulator, where the reduced beam diameter ensures that the separation of the transmitted and reflected beam is successful. The reflected beam originates from partly reflections on the optical surfaces of the modulator and through its separation, interference fringes can be avoided.

The telescope system allows to reduce the presence of interference fringes on the modulator: Interference fringes happen whenever the beam is reflected at a surface and interferes with itself. By making the beam narrower and putting optical elements at an angle the reflection will end up slightly offset from the incident beam. If the beam diameter is made small enough one can in particular place an aperture or a razor blade in a way that it blocks the reflected beam but the original beam can pass through unhindered. That way interference cannot happen.

Optionally, the method comprises the step:

k) attenuating the sample beam and/or the reference beam such that their intensities are closer to each other and/or such that their intensities are within a dynamic range of a sample detector measuring the intensity of the sample beam and a reference detector measuring the intensity of the reference beam. Optionally, the sample beam and/or the reference beam are attenuated prior to the interaction with the sample/reference and/or prior to the modulator and/or prior to the telescope system. Optionally, the sample beam and/or the reference beam are attenuated such that their intensities on the respective detector is closer to each other. Preferably, the sample beam and/or the reference beam are attenuated such that their intensities on the respective detector differ by less than 5 **%,** optionally by less than 3 %, of the total laser power upon reaching the respective detectors. A smaller difference in intensity of the laser is preferable. Preferably, the sample beam and/or the reference beam are attenuated by reflective optical elements in their respective beam paths. The reflective optical elements can in particular be metal (e.g., gold) sputtered wedged (e.g. 0.5°) windows (e.g., $BaF_2$, $CaF_2$, ZnSe, ZnS). Optionally, the attenuation is not constant across the spectrum. Preferably, it is higher in parts of the spectrum where the sample shows weak absorption and/or the laser has a higher intensity.

Optionally, the steps mentioned above are repeated for further wavelengths in order to record a (VCD) spectrum of the analyte. In particular, optionally, the steps a) to h) and optionally i), j) and/or k) are repeated with the laser beam generated at further wavelengths in order to record a spectrum of the analyte. E.g., spectra can be collected by tuning the laser to specific wavelengths or in a sweep mode e.g. between 1780 and 1550 $cm^{-1}$ e.g. with a scan speed of 640 $cm^{-1}$/s, where the laser wavelength is continuously tuned across a range of wavelengths. Optionally, drive voltage of the modulator (in particular an EOM) is continually adjusted over the course of the spectral acquisition (i.e. the drive voltage of the modulator is adjusted in accordance with the present wavelength). This allows to keep the modulator at a constant (perfect) quarter wave state over the whole spectral range. Due to the short settling time needed for the modulator (in particular the EOM) after each voltage switch, this step only marginally prolongs measurement time. At the same time, the influence of polarization dependent artefacts can be reduced, due to the continuing adjustment of the phase retardation over the wavelength range. Optionally, the voltage switch can be performed according to an established relationship between voltage, wavelength and retardation. This relationship may be determined from theoretical considerations or from an experimental characterization of the modulator.

Optionally, the modulation of the polarization of the sample beam is adjusted to achieve a specific modulation of polarization, preferably for each wavelength within the spectrum.

Returning to the device, it is preferable if the device comprises a recovering unit configured for recovering a sample beam polarization dependent intensity change from the difference signal.

Optionally, the device comprises a sample beam attenuator for attenuating the sample beam and a reference beam attenuator for attenuating the reference beam, in particular such that the respective beam is within a dynamic range of the respective detector, wherein the sample beam attenuator and the reference beam attenuator are optionally reflective attenuators. Optionally, an additional attenuator can be inserted between the laser and the beam splitter.

Optionally, the device comprises a telescope system in an optical path of the sample beam prior to the sample cell for reducing a beam diameter of the sample beam, wherein the telescope system optionally comprises a Galilean telescope.

Optionally, the sample cell and the reference cell are provided by a double path transmission cell.

Optionally, a path length of the sample beam in the sample cell is equal to a path length of the reference beam in the reference cell. Optionally, a path length of the sample beam in the sample cell differs by less than 2 % from a path length of the reference beam in the reference cell.

Optionally, there is provided for a sample beam focusing lens for focusing the sample beam through the modulator and through the sample cell onto the sample detector and a reference beam focusing lens for focusing the reference beam through the reference cell onto the reference detector

Optionally, the modulator comprises a photoelastic modulator (PEM). Optionally, the PEM may comprise ZnSe.

Optionally, the modulator is arranged in the optical path of the sample beam placed at a tilt from a plane normal to an optical beam path of the sample beam, preferably tilted by between 5° and 20°, in particular 15°, relative to said normal plane. The modulator is tilted by between 5 and 20°, in particular 15°, along the vertical axis. Optionally, the modulator is tilted around its optical axis, which is oriented at 45° to the vertical. (In the present disclosure, the linear polarization of the sample beam is in particular assumed to be vertical. This is an arbitrary choice and changes to a different orientation of the polarization required to the optical setup are straight-forward.) This allows for separation of the reflected **(i.e.** reference) beam, thus reducing interference effects at the modulation frequency. The reflected beam can then be blocked by a blockage or an aperture.

Optionally, the modulator comprises an electro-optic modulator (EOM). Preferably, the EOM is arranged orthogonal to the laser beam. Optionally, this EOM is operated at frequencies at least an order of magnitude higher than commonly used PEM modulator frequencies. This enables an increase of the scan rate (and thus lower noise because of the 1/frequency advantage), while still avoiding interactions between the sampling rate and the modulator frequency. This increases the spectra per time resolution. The settling time after voltage (i.e. modulation depth/amplitude) changes is significantly lower for EOMs than for PEMs. This enables the adaption of modulation depth over the wavelength without increasing the measurement time.

Optionally, an optical axis of the modulator (i.e. the stress axis in case of a photo-elastic modulator) is oriented at 45°, to an intrinsic linear polarization of the laser light source.

Optionally, there is provided for a control unit, comprising a data acquisition unit connected to the subtractor, connected to the modulator and connected to a waveform generator, wherein the waveform generator is connected to a laser driver of the laser light source. Alternatively, instead of the connecting to a waveform generator, the data acquisition unit may be connected to the laser driver (directly). Optionally, the control unit is configured for conducting the method according to any of the variants described in this disclosure. The data acquisition unit may comprise a lock-in amplifier and/or a high speed analog to digital converter and/or an analog sample hold unit. The data acquisition unit may be referenced to the modulator frequency and/or the laser repetition frequency. This can be done either directly via the modulator and/or the laser driver, respectively, or indirectly using the waveform generator. In one embodiment (a "free-running" embodiment), the laser is not referenced to the modulator. In another embodiment (the "referenced" laser configuration), the laser is referenced to the modulator, e.g. by employing a waveform generator that is referenced to the modulator. Then, the waveform generator controls the laser pulses according to a pulsing scheme, e.g. such that the laser pulses pass the modulator at the points of maximum amplitude (i.e. maximum and minimum retardation). "Reference" in this disclosure refers in particular to the synchronisation of the waveform generator and the modulator, keeping the phase and frequency between the two constant. This can e.g. be realised by a transistor-transistor logic (TTL) level signal fed to the phase locked loop of the waveform generator. Optionally, this can be realised by controlling both the laser and the modulator with the waveform generator. The delay of the waveform generator may be set in a way such that the pulses correspond to the maxima/minima of the sinusoidal modulation cycle or some other defined retardation. A detector module may comprise the sample detector, the reference detector and the subtractor. The difference signal and/or the reference signal may be picked up from the detector module in reference to the laser repetition frequency and the modulator frequency. Optionally, the control unit comprises the recovering unit.

Optionally, the control unit is configured such that the data acquisition unit collects data from the subtractor and/or the reference detector and/or the sample detector synchronized to a laser repetition frequency of the laser light source and/or to a modulator frequency of the modulator (and in particular synchronized with both the laser repetition frequency and the modulator frequency).

Optionally, the modulator is connected to the waveform generator and the control unit is further configured such that the waveform generator controls the laser light source to emit laser pulses dependent on a state of the modulator. In this way, the laser light source can be controlled to emit the laser pulses such that they pass the modulator during a particular modulation state, e.g. at maximum amplitude.

The VCD spectrum is defined as the difference in absorption for left-handed circular (LHC) and right-handed circular (RHC) polarized light (see: Nafie, L. A. Vibrational Optical Activity; John Wiley & Sons, Ltd: Chichester, UK, 2011).

For the present setup, in particular the following steps are undertaken for determining the VCD spectrum:

- The sample cell and the reference cell are filled with the solvent.
- The reference signal is collected at the laser frequency. (referred to a "reference single channel")
- The difference signal is collected at the laser frequency and the modulator frequency.
- The sample cell is filled with the sample (i.e. the solvent plus the analyte)
- The difference signal is collected at the laser frequency and the modulator frequency.
- The calculations are as follows:

  ◦ The difference signal collected at the modulator frequency is divided by the sum of the difference signal collected at the laser repetition frequency and the reference single channel.
  ◦ This is done for both the solvent and the sample.
  ◦ Then the result for the solvent is subtracted from the result for the sample, resulting in the VCD spectra of the sample.
  ◦ Optionally, some corrections can be performed to achieve a more precise VCD spectrum:

    ▪ "Enantiomeric correction": two enantiomers are measured (successively). Baseline correction is calculated as the mean of the enantiomer VCD spectra instead of using the solvent.
    ▪ "Racemic correction": Baseline correction using a VCD spectrum of a racemic mixture of the sample molecule

In the following, the disclosure shall be further explained with reference to the figures, which show advantageous embodiments and variants and shall in no way be construed to be limiting to the invention:

Fig. 1 schematically shows a preferred embodiment of the device for circular dichroism analysis of an analyte.
Fig. 2A schematically shows an example of a control unit of the device shown in Fig. 1.
Fig. 2B schematically shows another example of a control unit of the device shown in Fig. 1.
Fig. 3 shows a VCD spectra collected by the device of Fig. 1 and a comparison of the noise levels of the state of the art and the present invention.
Fig. 4 shows the results for long term measurements according to the state of the art and the present invention.
Fig. 5 illustrates an adjustment of the drive voltage of the modulator depending on the wavelength.
Fig. 6A shows the sample signal, the reference signal and the difference signal demodulated at the laser repetition frequency.
Fig. 6B shows the sample signal from Fig. 6A magnified.
Fig. 6C shows the sample signal and the difference signal demodulated at the modulator frequency.
Fig. 7A shows spectra collected at the laser frequency from the difference signal for the solvent and the analyte.
Fig. 7B shows spectra for the solvent and the analyte after the offset correction.
Fig. 7C shows the classical absorbance spectra of the analyte.
Fig. 8A shows spectra collected from the difference signal, demodulated at the modulator frequency, for the solvent and the analyte.
Fig. 8B shows raw VCD spectra for the analyte and the solvent.
Fig. 8C shows solvent corrected VCD spectra of the analyte.
Fig. 9 shows representations of the intensity collected at the laser frequency and the difference in absorbance for left-handed and right-handed circular polarised light, collected at the modulator frequency.
Fig. 10A shows a representation of a "free-running" configuration.
Fig. 10B shows a representation of a "referenced" laser configuration.
Fig. 11 shows a flowchart depicting an exemplary workflow for a VCD measurement with an exemplary setup e.g. as shown in Fig. 1.

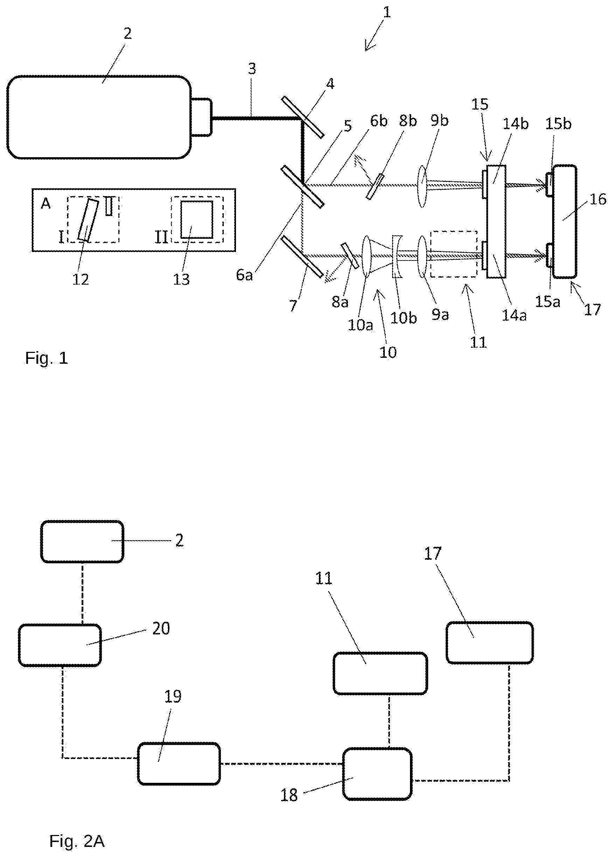

Fig. 1 schematically shows a preferred embodiment of the device 1 for circular dichroism analysis of an analyte. The device 1 comprises a laser light source 2 for providing a laser beam 3. Preferably, the laser light source 2 is a tuneable semiconductor laser. The laser beam 3 is directed via a mirror 4 onto a beam splitter 5, in particular a 50/50-beam splitter. The beam splitter 5 splits the laser beam 3 into a sample beam 6a (in this case, the beam transmitted at the beam splitter 5) and a reference beam 6b (in this case, the beam reflected at the beam splitter 5). The sample beam 6a is reflected at another mirror 7. In the optical path of the sample beam 6a, there is provided for a sample beam attenuator 8a for attenuating the sample beam 6a and in an optical path of the reference beam 6b, there is provided for a reference beam attenuator 8b. The attenuators 8a, 8b are used to adjust the intensities of both beams 6a, 6b so they are similar and lie within a dynamic range of their detectors.

In the optical path of the sample beam 6a, a telescope system 10 is provided for reducing a beam diameter of the sample beam 6a, in particular reducing the sample beam diameter to below 1 mm. The telescope system 10 comprises a Galilean telescope with a converging lens 10a and a diverging lens 10b. There is provided for a modulator 11 for modulating the polarization of the sample beam 6a. The modulator 11 is arranged such that its optical axis is oriented at 45° to an intrinsic linear polarization of the laser light source 2.

The inset A of Fig. 1 shows two preferred embodiments of the modulator 11. According to embodiment I, the modulator 11 comprises a PEM 12. The PEM 12 is arranged in the optical path of the sample beam 6a tilted to a plane orthogonal to the sample beam 6a by 15°. This allows for the separation of the reflected beam, reducing the influence of interference effects. The reflected beam can then be blocked by a blockage or an aperture. According to embodiment II depicted on the right hand side, the modulator 11 comprises an EOM 13. The EOM 13 is arranged orthogonal to the sample beam 6a.

After the modulator 11, there is provided for a sample cell 14a for interaction of the sample beam 6a with a sample comprising an analyte. Further, there is provided for a reference cell 14b for interaction of the reference beam 6b with a reference. The sample cell 14a and the reference cell 14b are provided by a double path transmission cell 15. A path length of the sample beam 6a in the sample cell 14a is equal to a path length of the reference beam 6b in the reference cell 14b.

A sample detector 15a detects the sample beam 6a after the interaction with the sample in the sample cell 14a for obtaining a sample beam signal corresponding to an intensity of the sample beam 6a. A reference detector 15b detects the reference beam 6b after the interaction with the reference in the reference cell 14b for obtaining a reference beam signal corresponding to an intensity of the reference beam 6b. A subtractor 16 forms a difference signal of the sample signal and the reference signal. A balanced module 17 comprises the sample detector 15a, the reference detector 15b and the subtractor 16.

A sample beam focusing lens 9a is provided in the optical path of the sample beam 6a between the telescope system 10 and the modulator 11 and focuses the sample beam 6a through the modulator 11 and the sample cell 14a at the sample detector 15. A reference beam focusing lens 9b is provided in the optical path of the reference beam 6b between the reference beam attenuator 8b and the reference cell 14b and focuses the reference beam 6b through the reference cell 14b at the reference detector 15b.

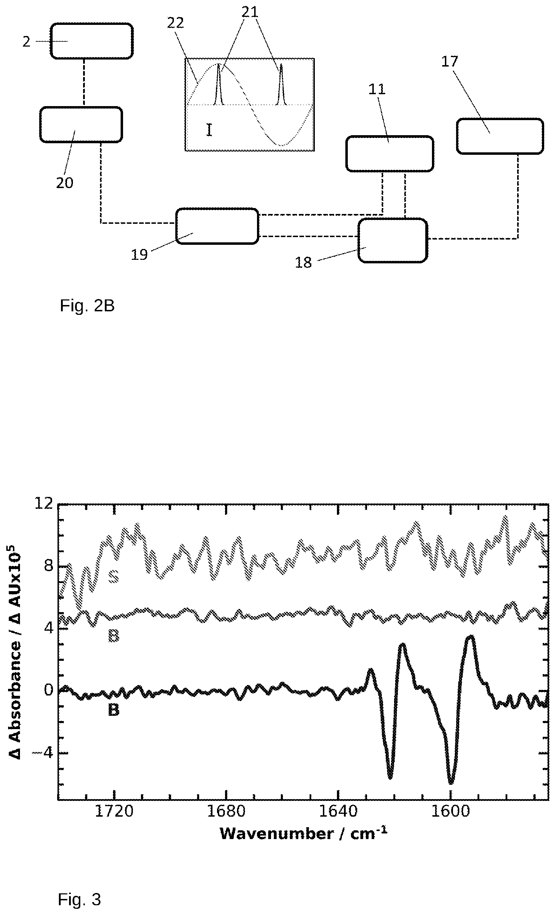

The device 1 comprises a control unit. Two exemplary embodiments of the control unit (or of the electronical setup and connections of the device 1) are shown in Fig. 2A and in Fig. 2B, respectively. Each of these can be used in connection with the embodiment of Fig. 1.

In the both embodiments, the control device comprises a data acquisition unit 18, which is connected to the balanced module 17, the modulator 11 and a waveform generator 19, which in turn is connected to a laser driver 20 of the laser light source 2. Alternatively, the data acquisition unit 18 can be connected to the laser driver 20 directly. The laser driver 20 controls a pulsing scheme of the laser light source 2. The data acquisition unit 18 may be a lock-in amplifier, a high speed analog to digital converter, or an analog sample hold unit.

In the embodiment shown in Fig. 2A (which is also labelled a "free-running" laser configuration), the data acquisition unit 18 is referenced to a modulator frequency and a laser repetition frequency. I.e., the data acquisition unit 18 collects data from the balanced module 17, in particular from the subtractor 16 and the reference detector 15b, synchronized to a laser repetition frequency of the laser light source 2 and synchronized to a modulator frequency of the modulator 11. I.e., the data acquisition unit 18 may collect data from the balanced module 17 for every laser pulse of the laser light source 2 and for every modulation cycle of the modulator 11. In this embodiment, the laser is not referenced to the modulator. Preferably, the laser repetition frequency is higher than the modulator frequency.

In the embodiment shown in Fig. 2B (which is also labelled a "referenced" laser configuration), the waveform generator 19 is connected to the modulator 11 and the waveform generator 19 (and therewith the pulsing scheme of the laser light source 2) is referenced to the modulator 11. I.e. the waveform generator 19 is controlled by the modulator 11 or receives control signals from the modulator 11 such that the waveform generator 19 can control the pulsing scheme in accordance with the modulator frequency. The waveform generator 19 then controls the laser pulses according to the pulsing scheme depicted in the inset I of Fig. 2B. The delay of the waveform generator 19 is set in a way such that the laser pulses (shown as lines 21) correspond to the maxima and minima of the sinusoidal modulation cycle (shown as the line 22). I.e., the laser repetition frequency is twice the modulation frequency. As in the embodiment of Fig. 2A, the data acquisition unit 18 collects the difference signal and the reference signal from the balanced module 17 in reference to the laser repetition frequency and the modulator frequency.

For the measurement of the VCD spectra, first a reference spectrum is collected with both cells 14a, 14b filled with the solvent (i.e. the solvent is used as the sample and as the reference). Then a background spectrum is collected, again with both cells 14a, 14b filled with the solvent (i.e. the solvent is used as the sample and as the reference). Then the sample cell 14a is filled with the analyte and the analyte spectrum is collected. The reference spectrum at the laser repetition frequency is added to the balanced channel spectra of both the solvent and the analyte. Afterwards the respective VCD spectra for solvent and analyte are calculated by dividing the spectrum at the modulator frequency by the spectrum at the laser repetition frequency. The resulting VCD spectra of the solvent is then subtracted from the VCD spectra of the analyte, resulting in the baseline corrected VCD spectra of the analyte.

Fig. 3 depicts typical VCD spectra collected with the setup shown in Fig. 1, with a PEM 12 used as the modulator 11 operated at 42 kHz and in the "free running" laser configuration described in the context of Fig. 2A. The lower spectrum, labelled "B" for balanced operation, corresponds to 0.1 mol S-1,1'-Bi-2-naphthol (S-BINOL) (i.e. the analyte) dissolved in $CHCl_3$ (i.e. the solvent), collected for 4:50 min (average of 700 scans) and with a pathlength of the sample cell 14a and the reference cell 14b, respectively, of 160 $\mu$m. I.e., the sample comprised the analyte and the solvent, whereas the reference comprised only the solvent and not the analyte. The corresponding noise levels are offset and depicted above. "S" denotes the noise level for $CHCl_3$ in the 160 $\mu$m pathlength cell for an average of 700 scans with only the sample signal collected. This is comparable to classical quantum cascade laser measurement setups. "B" denotes the noise level for $CHCl_3$ in the 160 $\mu$m pathlength cell, as an average of 700 scans and collected according to the present invention. There is a reduction in noise by a factor of 3.5 and lower fluctuations between different replicates. In comparison to the literature, the room mean square error (RMS) is better by a factor of 4 (at 1/6 of the measurement time). The noise level height, which is the maximum deviation from the 0-line, is better by a factor of 13 (at 1/6 of the measurement time).

In the literature (United States Pharmacopeia and National Formulary (USP 41-NF 36)), the signal noise level was $5 \times 10^{-5}$ (at 60 minutes), while with the present invention, the signal noise level was $3.8 \times 10^{-6}$ (at 10 minutes). Further, in the literature (M. Bonmarinand J. Helbing, Opt. Lett., 2008, 33, 2086), the RMS error of the baseline was $8 \times 10^{-6}$ (at 60 minutes), while with the present invention, the RMS error of the baseline was $1.9 \times 10^{-6}$ (at 10 minutes).

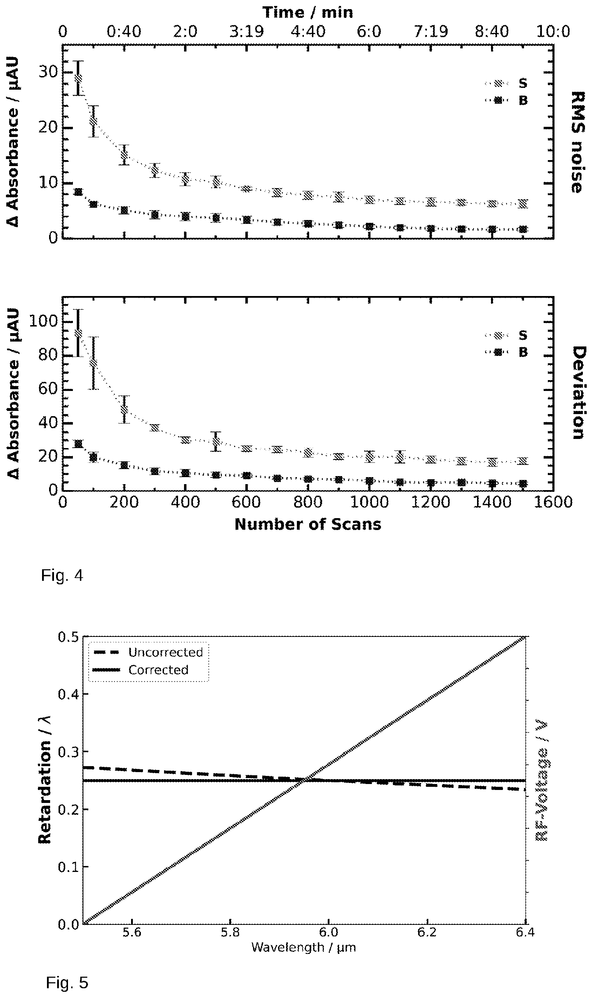

In Figure 4 the results for long term measurements are shown. For both the "classical" setup encompassing a single detector ("S") and the "balanced" setup according to the present invention utilizing two matching MCT detectors ("B") 100 % lines of $CHCl_3$ in the 160 $\mu$m cell were collected 5 times for up to 1500 scans averages (10 minutes). For each spectra the Root Mean Square error (RMS) and the maximum deviation from zero for the spectra in the spectral range between 1730 and 1600 $cm^{-1}$ were calculated. The deviation is a figure of merit characterizing VCD spectra according to the US pharmacopeia (The United States pharmacopeia. The National formulary). The depicted curve compares the performance of S and B as an average of the 5 measurements with error bars representing the standard deviation. The upper panel shows the RMS noise relative to the averaged scans/measurement time and the lower panel plots the deviation from zero against the averaged scans/measurement time.

Fig. 5 illustrates an adjustment of the drive voltage of the modulator 11 depending on the wavelength. Circularly polarised light is achieved by a $\lambda$/4 retardation. However, for one defined modulator drive voltage, a precise $\lambda$/4 retardation is only achieved for one wavelength. This would result in an elliptic polarization for the remaining wavelengths when a spectrum is recorded. QCLs emit monochromatic light, the wavelength of which is time-dependent. The retardation that the modulator 11 imposes on the sample beam 6a is proportional to the drive voltage of the modulator 11. It is preferable that a drive voltage of the modulator 11 is adjusted over the course of the spectral acquisition (i.e. the drive voltage of the modulator 11 is adjusted in accordance with the present wavelength). This allows to keep the modulator 11 at a constant (perfect) quarter wave state of retardation of the sample beam 6a over the whole spectral range.

Fig. 5 shows the imposed retardation with and without this correction, as well as the drive voltage.

Exemplary spectra and the approach for obtaining them are described in the following.

Operating principle:

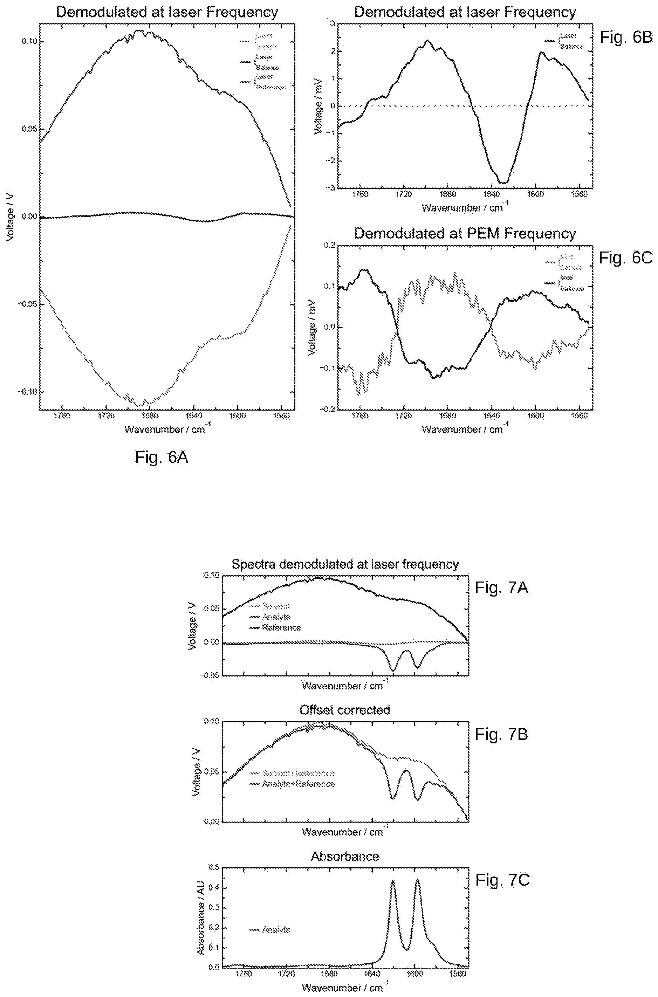

A balanced detection module (comprising the sample detector 15a, the reference detector 15b and the subtractor 16) outputs both the voltage from the reference detector 15b as well as from the sample detector 15a (or, respectively, the inverted voltage from the sample detector 15a). Additionally, the balanced detection module also outputs the difference signal between the two, called the balanced channel. This voltage carries the information about the classical absorbance of the analyte at the laser repetition frequency, and the information about the differences in circular absorbance at the modulator frequency. The resulting spectra are shown in Figs. 6A to 6C.

In particular, Fig. 6A shows the reference signal, the sample signal (inverted due to the particular electronical configuration) and the balanced channel (i.e. the difference signal). Fig. 6B shows the balanced channel, magnified from Fig. 6A. Mind the unit of the voltage in Fig. 6B in comparison to Fig. 6A. Figs. 6A and 6B are demodulated at the laser repetition frequency. Fig. 6C shows the VCD spectra collected at the modulator frequency for the sample signal and the balanced channel.

Lock-in amplifier as data acquisition:

For the calculation of the classical absorbance, the intensity of the background and the intensity of the analyte are collected at the laser frequency (Equation 1):

$$Absorbance = -\log(\frac{I_{analyte}}{I_{solvent}})$$

Since the voltage collected at the laser frequency for the balanced channel only contains the difference in intensity, it should be adjusted with an offset. This offset is the voltage collected at the laser frequency for the reference signal (Fig. 6A), which is collected once and added to each balanced output, with only the solvent in both the sample cell 14a and the reference cell 14b (Equation 2):

$$Absorbance = -\log(\frac{I_{balance,analyte}^{Laser} + I_{Reference}^{Laser}}{I_{balance,solvent}^{Laser} + I_{Reference}^{Laser}})$$

This equation is visualized in Figs. 7A to 7C, with the spectra collected at the laser frequency shown in Fig. 7A, the offset corrected solvent and analyte spectra shown in Fig. 7B and the calculated absorbance of the analyte in Fig. 7C.

In particular, Fig. 7A shows the spectra collected at the laser frequency from the balanced channel for the solvent and the analyte. The reference channel collected at the laser frequency is also shown, as this is used as offset for the balanced channel spectra. Fig. 7B shows the spectra for the solvent and analyte after the offset correction. Fig. 7C shows the classical absorbance spectra of the analyte, calculated from the spectra in Fig. 7B according to -log10(analyte/solvent).

For the VCD spectra, the general equation is (Equation 3):

$$VCD = Abs_l - Abs_r \approx \frac{1}{2 * J_1[\propto_M^0 (\bar{v})] * 1.1513} * (\frac{I_{AC}^{analyte}}{I_{DC}^{analyte}} - \frac{I_{AC}^{solvent}}{I_{DC}^{solvent}})$$

with $Abs_l$ and $Abs_r$ corresponding to the absorbance for left-handed and right-handed circular polarized light respectively. When measuring VCD with a modulator 11, this can be transformed to the right equation, in which $I_{AC}$ corresponds to the signal demodulated at the modulator (e.g. PEM) frequency and $I_{DC}$ corresponding to the classical IR intensity, and $J_1[\propto_M^0 (\bar{v})]$ corresponding to the first order Bessel function of the modulator retardation at each wavenumber $\bar{v}$. This transformation can be performed due to small signal arising from VCD, which makes the replacement of the logarithm present in normal absorbance measurements by divisions appropriate (if the VCD intensity is below 10 % compared to the absorbance, this is valid).

While the solvents are generally chosen to be non-chiral, the VCD spectrum of the solvent can still be different from 0. This is due to birefringence arising in the optical setup, which can be present in the lenses, the windows of the detector and the cells and every other optical element after the modulator. The subtraction of the solvent VCD spectra eliminates the influence of these artefacts. Sometimes, absorbance artefacts arising from the sample itself can distort the VCD spectrum, in which case the baseline correction can be performed by subtracting the spectra measured for the racemate or the other enantiomer.

In this exemplary setup, $I_{AC}$ corresponds to the intensity collected from the balance channel and demodulated at the modulator frequency. Since $I_{DC}$ corresponds to the classical IR intensity, it can be defined in this setup as the balanced channel demodulated at the laser frequency and offset corrected (cf. Equation 2, Figs. 7A to 7C). Therefore, Equation 3 can be rewritten as following for this setup (Equation 4):

$$VCD = \frac{I_{balance,analyte}^{Modulator}}{I_{balance,analyte}^{Laser} + I_{Reference}^{Laser}} - \frac{I_{balance,solvent}^{Modulator}}{I_{balance,solvent}^{Laser} + I_{Reference}^{Laser}}$$

The two fractions are called the raw VCD spectra of the analyte and the solvent respectively.

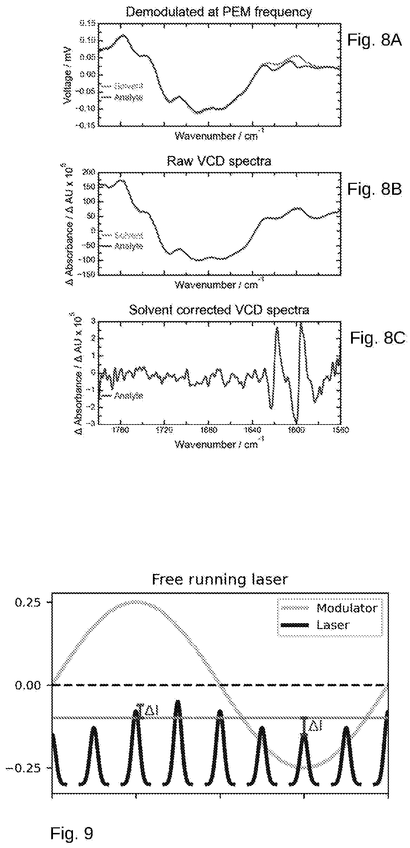

This is visualized in Figs. 8A to 8C. In Fig. 8A the spectra sampled from the balanced channel demodulated at the modulator (in particular PEM) frequency is shown. With these the raw VCD spectra in Fig. 8B can be calculated according to Equation 4. Although the solvent (CHCl$_3$ in this case) is achiral, the VCD spectra deviates from 0 and contains the artefacts present in the optical train. Therefore, it is necessary to correct the VCD spectra of the analyte by subtracting the VCD spectra of the solvent, to account for those artefacts. The results are shown in Fig. 8C.

In particular, Fig. 8A shows the spectra collected from the balanced channel, demodulated at the modulator frequency, for the solvent and the analyte. Fig. 8B shows raw VCD spectra ( $\frac{I_{AC}}{I_{DC}}$ ) for the analyte and the solvent. Fig. 8C shows the solvent corrected VCD spectrum of the analyte; calculated by subtracting the spectra in Fig. 8B.

Fig. 9 shows representations of I and $\Delta$I. I corresponds to the intensity collected at the laser Frequency. $\Delta$I corresponds to the difference in absorbance for left-handed and right-handed circular polarised light, collected at the modulator frequency.

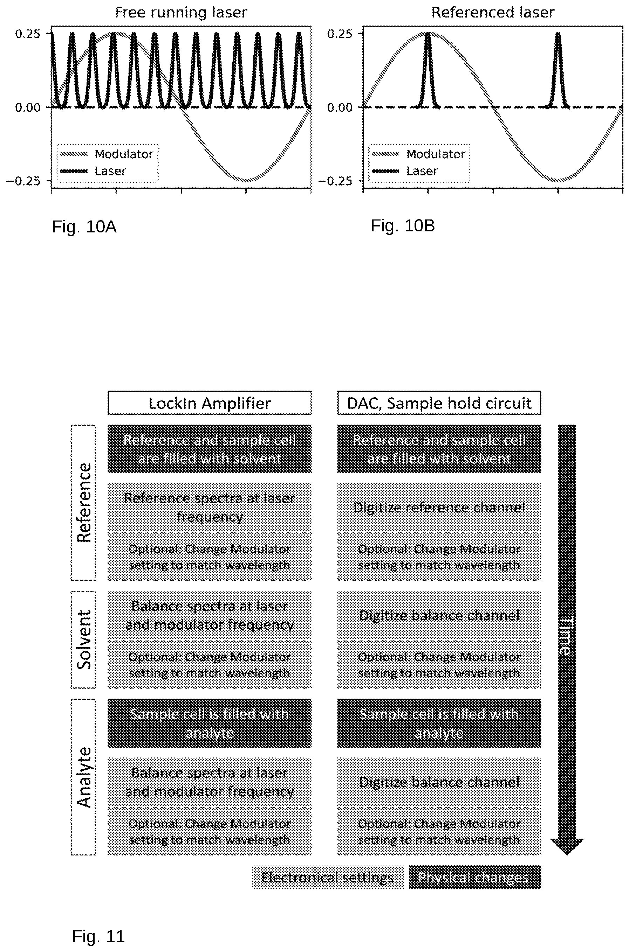

The above equations are applicable if the laser is used in the "free running" configuration or the "referenced" configuration. Both configurations are depicted in Fig. 10A and 10B. The difference in the data acquisition between the "referenced" and the "free running" laser configuration lies entirely in the laser frequency. For the "free running" configuration, this frequency is significantly higher than the modulator frequency (for example set to 1 MHz), while for the "referenced" laser configuration it is the second harmonic of the modulator frequency.

In particular, Fig. 10A shows a representation of the "free running" configuration. The laser is not referenced to the modulator and set to a pulsing frequency higher than the modulator, providing laser pulses for most minima/maxima of the modulation cycle. Fig. 10B shows the "referenced" laser configuration, with the laser operating at the second harmonic of the modulator. One pulse each is produced for the minima and the maxima of each modulator cycle. Preferably (but not shown in Fig. 9B, they are offset from the actual maxima and minima of the modulation cycle to ensure maximal circular polarization).

High speed DAC or sample-hold circuit:

The "referenced" laser configuration offers another option to organise the data acquisition. Since the pulses are aligned with the "perfect" retardation, in our case corresponding to circular polarization, they can be digitized separately and used to calculate the absorbance for left and right-handed circular polarised light respectively. Thus Equation 1 can be modified to reflect $\Delta A = A_{left} - A_{right}$:

$$VCD_{Corrected} = -\log\left(\frac{I_{analyte}^{left}}{I_{Solvent}^{left}}\right) + \log\left(\frac{I_{analyte}^{right}}{I_{Solvent}^{right}}\right)$$

The resulting VCD spectra in this case is already baseline corrected with the solvent.

Modulator setting:

Regardless of the configuration, the retardation imposed by the modulator can be adjusted parallel to the wavelength sweep. This ensures the correct polarization at each wavelength.

The flow chart in Figure 11 depicts a general workflow for one VCD measurement with the balanced detection setup. It should be kept in mind, that the "reference" part only needs to be performed upon changing the solvent or at the start of a series of measurements.

The invention is a result of work conducted in the course of the COMET-centre CHASE, which is supported within COMET - Competence Centers for Excellent Technologies by BMK Austria, BMDW Austria and the states of Upper Austria and Vienna. The COMET program is handled by the Austrian Research Promotion Agency (FFG).

**Claims**

1. Method for vibrational circular dichroism analysis of an analyte, comprising the steps:

   a) generating a laser beam (3) at a wavelength preferably in the infrared region;
   b) splitting the laser beam (3) into a sample beam (6a) and a reference beam (6b);
   c) modulating the polarization of the sample beam (6a);
   d) interacting of the sample beam with a sample comprising the analyte;
   e) interacting of the reference beam (6b) with a reference;
   f) measuring the intensity of the sample beam (6a) to obtain a sample signal;
   g) measuring the intensity of the reference beam (6b) to obtain a reference signal;
   h) subtracting the sample signal and the reference signal to obtain a difference signal;
   i) recovering a polarization dependent intensity change introduced by the analyte from the difference signal.

2. Method according to claim 1, wherein the polarization dependent intensity change is due to a difference in absorption of left-handed and right-handed circular polarized light in the sample or analyte.

3. Method according to any one of the previous claims, wherein an intensity signal is calculated from the difference signal, and the reference signal and/or the sample signal,
wherein optionally the intensity signal is used to scale the polarization dependent intensity change.

4. Method according to any one of the previous claims, wherein the laser beam (3) is generated in pulses with a laser repetition frequency and wherein the sample beam (6a) is modulated by a modulator (11), which imposes a change in the polarization according to a modulator frequency, wherein optionally the laser repetition frequency is equal to or larger than the modulator frequency,
wherein preferably each period of the periodically oscillating change in the polarization imposed by the modulator (11) comprises a maximum and a minimum of imposed change in the polarization and wherein the pulses of the laser beam (3) are generated at specific times during the periodic oscillation of the modulator (11),
wherein more preferably the specific times are chosen to coincide with the maximum and minimum of imposed change in the polarization or the specific times are chosen to coincide with an imposed maximally circular polarization and/or an imposed maximally linear polarization.

5. Method according to claim 4, comprising further the step:
j) transmitting the reference signal and the difference signal to a data acquisition unit (18) and referencing the reference signal and the difference signal to the laser repetition frequency and/or the modulator frequency.

6. Method according to any one of the previous claims, comprising, prior to interacting the sample beam (6a) with the sample, reducing the beam diameter of the sample beam (6a) with a telescope system (10).

7. Method according to any one of the previous claims, comprising the step:
k) attenuating the sample beam (6a) and/or the reference beam (6b) such that their intensities are closer to each other and/or such that their intensities are within a dynamic range of a sample detector (15a) measuring the intensity of the sample beam (6a) and a reference detector (15b) measuring the intensity of the reference beam (6b).

8. Method according to any one of the previous claims, wherein the steps a) to h) and optionally i), j) and/or k) are repeated with the laser beam (3) generated at further wavelengths in order to record a spectrum of the analyte,
wherein optionally the modulation of the polarization of the sample beam is adjusted to achieve a specific modulation of polarization, preferably for each wavelength within the spectrum.

9. Device (1) for vibrational circular dichroism analysis of an analyte, comprising:

- a laser light source (2) for providing a laser beam (3);
- a beam splitter (5) for splitting the laser beam (3) into a sample beam (6a) and a reference beam (6b);
- a modulator (11) for modulating the polarization of the sample beam (6a);
- a sample cell (14a) for interaction of the sample beam (6a) with a sample comprising the analyte;
- a reference cell (14b) for interaction of the reference beam (6b) with a reference;
- a sample detector (15a) for detecting the sample beam (6a) and obtaining a sample beam signal corresponding to an intensity of the sample beam (6a);
- a reference detector (15b) for detecting the reference beam (6b) and obtaining a reference signal corresponding to an intensity of the reference beam (6b);
- a subtractor (16) for forming a difference signal of the sample signal and the reference signal for recovering a polarization dependent intensity change introduced by the analyte from the difference signal.

10. Device (1) according to claim 9, comprising a sample beam attenuator (8a) for attenuating the sample beam (6a) and a reference beam attenuator (8b) for attenuating the reference beam (6b), in particular such that the respective beam is within a dynamic range of the respective detector, wherein the sample beam attenuator (8a) and the reference beam attenuator (8b) are optionally reflective attenuators.

11. Device (1) according to any one of claims 9 and 10, comprising a telescope system (10) in an optical path of the sample beam (6a) prior to the sample cell (14a) for reducing a beam diameter of the sample beam (6a), wherein the telescope system (10) optionally comprises a Galilean telescope.

12. Device (1) according to any one of claims 9 to 11, wherein the sample cell (14a) and the reference cell (14b) are provided by a double path transmission cell, and/or
wherein a path length of the sample beam (6a) in the sample cell (14a) is equal to a path length of the reference beam

(6b) in the reference cell (14b).

13. Device (1) according to any one of claims 9 to 12, comprising a sample beam focusing lens (9a) for focusing the sample beam (6a) through the modulator (11) and through the sample cell (14a) onto the sample detector (15a) and a reference beam focusing lens (9b) for focusing the reference beam (6b) through the reference cell (14b) onto the reference detector (15b),

   wherein optionally the modulator (11) comprises a photo-elastic modulator (12) or an electro-optic modulator (13).

14. Device (1) according to any one of claims 9 to 13, wherein the modulator (11) is arranged in an optical path of the sample beam (6a) placed at a tilt from a plane normal to an optical beam path of the sample beam (6a), preferably tilted by between 5° and 20°, in particular 15°, relative to said plane normal to the optical beam path of the sample beam (6a), and/or

   wherein an optical axis of the modulator (11) is oriented at 45° to an intrinsic linear polarization of the laser light source (2).

15. Device (1) according to any one of claims 9 to 14, comprising a control unit, comprising a data acquisition unit (18) connected to the subtractor (16), connected to the modulator (11) and connected to a waveform generator (19), wherein the waveform generator (19) is connected to a laser driver (20) of the laser light source (2),

   wherein preferably the control unit is configured such that the data acquisition unit (18) collects data from the subtractor (16) and/or the reference detector (15b) and/or the sample detector (15a) synchronized to a laser repetition frequency of the laser light source (2) and/or to a modulator frequency of the modulator (11),

   wherein more preferably the modulator (11) is connected to the waveform generator (19) and the control unit is further configured such that the waveform generator (19) controls the laser light source (2) to emit laser pulses dependent on a state of the modulator (11).

**Patentansprüche**

1. Verfahren zur Schwingungszirkulardichroismus-Analyse eines Analyten, umfassend die Schritte:

   a) Erzeugen eines Laserstrahls (3) mit einer Wellenlänge, vorzugsweise im Infrarotbereich;
   b) Aufteilen des Laserstrahls (3) in einen Probenstrahl (6a) und einen Referenzstrahl (6b);
   c) Modulieren der Polarisation des Probenstrahls (6a);
   d) Wechselwirken des Probenstrahls mit einer Probe, die den Analyten umfasst;
   e) Wechselwirken des Referenzstrahls (6b) mit einer Referenz;
   f) Messen der Intensität des Probenstrahls (6a), um ein Probensignal zu erhalten;
   g) Messen der Intensität des Referenzstrahls (6b), um ein Referenzsignal zu erhalten;
   h) Subtrahieren des Probensignals und des Referenzsignals, um ein Differenzsignal zu erhalten;
   i) Rückgewinnen einer durch den Analyten eingebrachten polarisationsabhängigen Intensitätsänderung aus dem Differenzsignal.

2. Verfahren nach Anspruch 1, wobei die polarisationsabhängige Intensitätsänderung auf einer Differenz in der Absorption von linksdrehend und rechtsdrehend zirkular polarisiertem Licht in der Probe oder dem Analyten beruht.

3. Verfahren nach einem der vorhergehenden Ansprüche, wobei ein Intensitätssignal aus dem Differenzsignal und dem Referenzsignal und/oder dem Probensignal berechnet wird,

   wobei optional das Intensitätssignal verwendet wird, um die polarisationsabhängige Intensitätsänderung zu skalieren.

4. Verfahren nach einem der vorhergehenden Ansprüche, wobei der Laserstrahl (3) in Pulsen mit einer Laserwiederholungsfrequenz erzeugt wird und wobei der Probenstrahl (6a) durch einen Modulator (11) moduliert wird, welcher eine Änderung in der Polarisation gemäß einer Modulatorfrequenz aufprägt, wobei optional die Laserwiederholungsfrequenz gleich oder größer als die Modulatorfrequenz ist,

   wobei vorzugsweise jede Periode der periodisch oszillierenden Änderung in der Polarisation, die durch den Modulator (11) aufgeprägt wird, ein Maximum und ein Minimum an aufgeprägter Änderung in der Polarisation umfasst, und wobei die Pulse des Laserstrahls (3) zu spezifischen Zeiten während der periodischen Oszillation des Modulators (11) erzeugt werden,

wobei weiter vorzugsweise die spezifischen Zeiten so gewählt sind, dass sie mit dem Maximum und Minimum der aufgeprägten Änderung in der Polarisation zusammenfallen, oder die spezifischen Zeiten so gewählt sind, dass sie mit einer aufgeprägten maximal zirkularen Polarisation und/oder einer aufgeprägten maximal linearen Polarisation zusammenfallen.

5. Verfahren nach Anspruch 4, weiter umfassend den Schritt:
   j) Übertragen des Referenzsignals und des Differenzsignals an eine Datenerfassungseinheit (18) und Referenzieren des Referenzsignals und des Differenzsignals auf die Laserwiederholungsfrequenz und/oder die Modulatorfrequenz.

6. Verfahren nach einem der vorhergehenden Ansprüche, umfassend, vor dem Wechselwirken des Probenstrahls (6a) mit der Probe, das Reduzieren des Strahldurchmessers des Probenstrahls (6a) mit einem Teleskopsystem (10).

7. Verfahren nach einem der vorhergehenden Ansprüche, umfassend den Schritt:
   k) Abschwächen des Probenstrahls (6a) und/oder des Referenzstrahls (6b) derart, dass ihre Intensitäten näher beieinander liegen und/oder derart, dass ihre Intensitäten innerhalb eines Dynamikbereichs eines die Intensität des Probenstrahls (6a) messenden Probendetektors (15a) und eines die Intensität des Referenzstrahls (6b) messenden Referenzdetektors (15b) liegen.

8. Verfahren nach einem der vorhergehenden Ansprüche, wobei die Schritte a) bis h) und optional i), j) und/oder k) mit dem Laserstrahl (3) wiederholt werden, der bei weiteren Wellenlängen erzeugt wird, um ein Spektrum des Analyten aufzuzeichnen,
   wobei optional die Modulation der Polarisation des Probenstrahls angepasst wird, um eine spezifische Modulation der Polarisation zu erreichen, vorzugsweise für jede Wellenlänge innerhalb des Spektrums.

9. Vorrichtung (1) zur Schwingungszirkulardichroismus-Analyse eines Analyten, umfassend:

   - eine Laserlichtquelle (2) zum Bereitstellen eines Laserstrahls (3);
   - einen Strahlteiler (5) zum Aufteilen des Laserstrahls (3) in einen Probenstrahl (6a) und einen Referenzstrahl (6b);
   - einen Modulator (11) zum Modulieren der Polarisation des Probenstrahls (6a);
   - eine Probenzelle (14a) zur Wechselwirkung des Probenstrahls (6a) mit einer Probe, die den Analyten umfasst;
   - eine Referenzzelle (14b) zur Wechselwirkung des Referenzstrahls (6b) mit einer Referenz;
   - einen Probendetektor (15a) zum Detektieren des Probenstrahls (6a) und Erhalten eines Probenstrahlsignals, das einer Intensität des Probenstrahls (6a) entspricht;
   - einen Referenzdetektor (15b) zum Detektieren des Referenzstrahls (6b) und Erhalten eines Referenzsignals, das einer Intensität des Referenzstrahls (6b) entspricht;
   - einen Subtrahierer (16) zum Bilden eines Differenzsignals des Probensignals und des Referenzsignals zum Rückgewinnen einer durch den Analyten eingebrachten polarisationsabhängigen Intensitätsänderung aus dem Differenzsignal.

10. Vorrichtung (1) nach Anspruch 9, umfassend einen Probenstrahlabschwächer (8a) zum Abschwächen des Probenstrahls (6a) und einen Referenzstrahlabschwächer (8b) zum Abschwächen des Referenzstrahls (6b), insbesondere derart, dass der jeweilige Strahl innerhalb eines Dynamikbereichs des jeweiligen Detektors liegt, wobei der Probenstrahlabschwächer (8a) und der Referenzstrahlabschwächer (8b) optional reflektierende Abschwächer sind.

11. Vorrichtung (1) nach einem der Ansprüche 9 und 10, umfassend ein Teleskopsystem (10) in einem optischen Pfad des Probenstrahls (6a) vor der Probenzelle (14a) zum Reduzieren eines Strahldurchmessers des Probenstrahls (6a), wobei das Teleskopsystem (10) optional ein Galilei-Teleskop umfasst.

12. Vorrichtung (1) nach einem der Ansprüche 9 bis 11, wobei die Probenzelle (14a) und die Referenzzelle (14b) durch eine Doppelpfad-Transmissionszelle bereitgestellt sind, und/oder
    wobei eine Pfadlänge des Probenstrahls (6a) in der Probenzelle (14a) gleich einer Pfadlänge des Referenzstrahls (6b) in der Referenzzelle (14b) ist.

13. Vorrichtung (1) nach einem der Ansprüche 9 bis 12, umfassend eine Probenstrahl-Fokussierlinse (9a) zum Fokussieren des Probenstrahls (6a) durch den Modulator (11) und durch die Probenzelle (14a) auf den Probendetektor (15a) und eine Referenzstrahl-Fokussierlinse (9b) zum Fokussieren des Referenzstrahls (6b) durch die Referenzzelle (14b) auf den Referenzdetektor (15b),

wobei optional der Modulator (11) einen photoelastischen Modulator (12) oder einen elektrooptischen Modulator (13) umfasst.

14. Vorrichtung (1) nach einem der Ansprüche 9 bis 13, wobei der Modulator (11) in einem optischen Pfad des Probenstrahls (6a) angeordnet ist, und zwar platziert mit einer Neigung gegenüber einer Ebene normal zu einem optischen Strahlpfad des Probenstrahls (6a), vorzugsweise geneigt um zwischen 5° und 20°, insbesondere 15°, relativ zu der Ebene normal zu dem optischen Strahlpfad des Probenstrahls (6a), und/oder
wobei eine optische Achse des Modulators (11) unter 45° zu einer intrinsischen linearen Polarisation der Laserlichtquelle (2) ausgerichtet ist.

15. Vorrichtung (1) nach einem der Ansprüche 9 bis 14, umfassend eine Steuereinheit, umfassend eine Datenerfassungseinheit (18), die mit dem Subtrahierer (16) verbunden ist, mit dem Modulator (11) verbunden ist und mit einem Wellenformgenerator (19) verbunden ist, wobei der Wellenformgenerator (19) mit einem Lasertreiber (20) der Laserlichtquelle (2) verbunden ist,

    wobei vorzugsweise die Steuereinheit so eingerichtet ist, dass die Datenerfassungseinheit (18) Daten von dem Subtrahierer (16) und/oder dem Referenzdetektor (15b) und/oder dem Probendetektor (15a) synchronisiert zu einer Laserwiederholungsfrequenz der Laserlichtquelle (2) und/oder zu einer Modulatorfrequenz des Modulators (11) sammelt,
    wobei weiter vorzugsweise der Modulator (11) mit dem Wellenformgenerator (19) verbunden ist und die Steuereinheit weiter so eingerichtet ist, dass der Wellenformgenerator (19) die Laserlichtquelle (2) steuert, um Laserpulse in Abhängigkeit von einem Zustand des Modulators (11) zu emittieren.

## Revendications

1. Procédé d'analyse par dichroïsme circulaire vibrationnel d'un analyte, comprenant les étapes consistant à :

    a) générer un faisceau laser (3) ayant une longueur d'onde, de préférence dans le domaine infrarouge ;
    b) diviser le faisceau laser (3) en un faisceau d'échantillon (6a) et un faisceau de référence (6b) ;
    c) moduler la polarisation du faisceau d'échantillon (6a) ;
    d) faire interagir le faisceau d'échantillon avec un échantillon qui comprend l'analyte ;
    e) faire interagir le faisceau de référence (6b) avec une référence ;
    f) mesurer l'intensité du faisceau d'échantillon (6a) pour obtenir un signal d'échantillon ;
    g) mesurer l'intensité du faisceau de référence (6b) pour obtenir un signal de référence ;
    h) soustraire le signal d'échantillon et le signal de référence pour obtenir un signal de différence ;
    i) récupérer une variation d'intensité dépendant de la polarisation introduite par l'analyte à partir du signal de différence.

2. Procédé selon la revendication 1, dans lequel la variation d'intensité dépendant de la polarisation repose sur une différence dans l'absorption de lumière à polarisation circulaire gauche et droite dans l'échantillon ou l'analyte.

3. Procédé selon l'une des revendications précédentes, dans lequel un signal d'intensité est calculé à partir du signal de différence et du signal de référence et/ou du signal d'échantillon,
dans lequel, de manière facultative, le signal d'intensité est utilisé pour mettre à l'échelle la variation d'intensité dépendant de la polarisation.

4. Procédé selon l'une des revendications précédentes, dans lequel le faisceau laser (3) est généré en impulsions avec une fréquence de répétition de laser et dans lequel le faisceau d'échantillon (6a) est modulé par un modulateur (11), lequel impose une variation dans la polarisation selon une fréquence de modulateur,

    dans lequel, de manière facultative, la fréquence de répétition de laser est égale ou supérieure à la fréquence de modulateur,
    dans lequel, de préférence, chaque période de la variation oscillant périodiquement dans la polarisation, qui est imposée par le modulateur (11), comprend un maximum et un minimum de variation imposée dans la polarisation, et dans lequel les impulsions du faisceau laser (3) sont générées à des temps spécifiques pendant l'oscillation périodique du modulateur (11),
    dans lequel, de façon davantage préférée, les temps spécifiques sont choisis de sorte qu'ils coïncident avec le maximum et le minimum de la variation imposée dans la polarisation, ou les temps spécifiques sont choisis de sorte qu'ils coïncident avec une polarisation circulaire maximale imposée et/ou une polarisation linéaire maximale imposée.

5. Procédé selon la revendication 4, comprenant en outre l'étape consistant à :
   j) transmettre le signal de référence et le signal de différence à une unité d'acquisition de données (18) et référencer le signal de référence et le signal de différence par rapport à la fréquence de répétition de laser et/ou la fréquence de modulateur.

6. Procédé selon l'une des revendications précédentes, comprenant, avant l'interaction du faisceau d'échantillon (6a) avec l'échantillon, la réduction du diamètre de faisceau du faisceau d'échantillon (6a) avec un système de télescope (10).

7. Procédé selon l'une des revendications précédentes, comprenant l'étape consistant à :
   k) atténuer le faisceau d'échantillon (6a) et/ou le faisceau de référence (6b) de telle sorte que leurs intensités soient plus proches l'une de l'autre et/ou de telle sorte que leurs intensités se situent dans une plage dynamique d'un détecteur d'échantillon (15a) mesurant l'intensité du faisceau d'échantillon (6a) et d'un détecteur de référence (15b) mesurant l'intensité du faisceau de référence (6b).

8. Procédé selon l'une des revendications précédentes, dans lequel les étapes a) à h) et, de manière facultative, i), j) et/ou

   k) sont répétées avec le faisceau laser (3) qui est généré à d'autres longueurs d'onde, pour enregistrer un spectre de l'analyte,

   dans lequel, de manière facultative, la modulation de la polarisation du faisceau d'échantillon est adaptée pour atteindre une modulation spécifique de la polarisation, de préférence pour chaque longueur d'onde à l'intérieur du spectre.

9. Dispositif (1) d'analyse par dichroïsme circulaire vibrationnel d'un analyte, comprenant :

   - une source de lumière laser (2) pour fournir un faisceau laser (3) ;
   - un séparateur de faisceau (5) pour diviser le faisceau laser (3) en un faisceau d'échantillon (6a) et un faisceau de référence (6b) ;
   - un modulateur (11) pour moduler la polarisation du faisceau d'échantillon (6a) ;
   - une cellule d'échantillon (14a) pour l'interaction du faisceau d'échantillon (6a) avec un échantillon qui comprend l'analyte ;
   - une cellule de référence (14b) pour l'interaction du faisceau de référence (6b) avec une référence ;
   - un détecteur d'échantillon (15a) pour détecter le faisceau d'échantillon (6a) et obtenir un signal de faisceau d'échantillon qui correspond à une intensité du faisceau d'échantillon (6a) ;
   - un détecteur de référence (15b) pour détecter le faisceau de référence (6b) et obtenir un signal de référence qui correspond à une intensité du faisceau de référence (6b) ;
   - un soustracteur (16) pour former un signal de différence du signal d'échantillon et du signal de référence pour récupérer une variation d'intensité dépendant de la polarisation introduite par l'analyte à partir du signal de différence.

10. Dispositif (1) selon la revendication 9, comprenant un atténuateur de faisceau d'échantillon (8a) pour atténuer le faisceau d'échantillon (6a) et un atténuateur de faisceau de référence (8b) pour atténuer le faisceau de référence (6b), en particulier de telle sorte que le faisceau respectif se situe dans une plage dynamique du détecteur respectif, dans lequel l'atténuateur de faisceau d'échantillon (8a) et l'atténuateur de faisceau de référence (8b) sont, de manière facultative, des atténuateurs réfléchissants.

11. Dispositif (1) selon l'une des revendications 9 et 10, comprenant un système de télescope (10) dans un trajet optique du faisceau d'échantillon (6a) avant la cellule d'échantillon (14a) pour réduire un diamètre de faisceau du faisceau d'échantillon (6a), dans lequel le système de télescope (10) comprend, de manière facultative, un télescope de Galilée.

12. Dispositif (1) selon l'une des revendications 9 à 11, dans lequel la cellule d'échantillon (14a) et la cellule de référence (14b) sont fournies par une cellule de transmission à double trajet, et/ou

dans lequel une longueur de trajet du faisceau d'échantillon (6a) dans la cellule d'échantillon (14a) est égale à une longueur de trajet du faisceau de référence (6b) dans la cellule de référence (14b).

13. Dispositif (1) selon l'une des revendications 9 à 12, comprenant une lentille de focalisation de faisceau d'échantillon (9a) pour focaliser le faisceau d'échantillon (6a) à travers le modulateur (11) et à travers la cellule d'échantillon (14a) sur le détecteur d'échantillon (15a) et une lentille de focalisation de faisceau de référence (9b) pour focaliser le faisceau de référence (6b) à travers la cellule de référence (14b) sur le détecteur de référence (15b),
dans lequel, de manière facultative, le modulateur (11) comprend un modulateur photoélastique (12) ou un modulateur électro-optique (13).

14. Dispositif (1) selon l'une des revendications 9 à 13, dans lequel le modulateur (11) est disposé dans un trajet optique du faisceau d'échantillon (6a), et ce placé avec une inclinaison par rapport à un plan normal à un trajet de faisceau optique du faisceau d'échantillon (6a), de préférence incliné d'entre 5° et 20°, en particulier 15°, par rapport au plan normal au trajet de faisceau optique du faisceau d'échantillon (6a), et/ou
dans lequel un axe optique du modulateur (11) est aligné à 45° par rapport à une polarisation linéaire intrinsèque de la source de lumière laser (2).

15. Dispositif (1) selon l'une des revendications 9 à 14, comprenant une unité de commande, comprenant une unité d'acquisition de données (18) qui est connectée au soustracteur (16), est connectée au modulateur (11) et est connectée à un générateur de forme d'onde (19), dans lequel le générateur de forme d'onde (19) est connecté à un pilote de laser (20) de la source de lumière laser (2),

dans lequel, de préférence, l'unité de commande est conçue de telle sorte que l'unité d'acquisition de données (18) collecte des données provenant du soustracteur (16) et/ou du détecteur de référence (15b) et/ou du détecteur d'échantillon (15a) de manière synchronisée par rapport à une fréquence de répétition de laser de la source de lumière laser (2) et/ou par rapport à une fréquence de modulateur du modulateur (11),
dans lequel, de façon davantage préférée, le modulateur (11) est connecté au générateur de forme d'onde (19) et l'unité de commande est en outre conçue de telle sorte que le générateur de forme d'onde (19) commande la source de lumière laser (2) pour émettre des impulsions laser en fonction d'un état du modulateur (11).

Fig. 1

Fig. 2A

Fig. 2B

Fig. 3

Fig. 4

Fig. 5

**Demodulated at laser Frequency**

**Demodulated at laser Frequency**

Fig. 6B

**Demodulated at PEM Frequency**

Fig. 6C

Fig. 6A

**Spectra demodulated at laser frequency**

Fig. 7A

**Offset corrected**

Fig. 7B

**Absorbance**

Fig. 7C

Demodulated at PEM frequency

Fig. 8A

Raw VCD spectra

Fig. 8B

Solvent corrected VCD spectra

Fig. 8C

Free running laser

Fig. 9

Fig. 10A

Fig. 10B

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210247307 A1
- US 2003202179 A1
- JP 2007101280 A

**Non-patent literature cited in the description**

- **NAFIE, L. A.** Dual Polarization Modulation: A Real-Time, Spectral-Multiplex Separation of Circular Dichroism from Linear Birefringence Spectral Intensities.. *Appl. Spectrosc.*, 2000, vol. 54 (11), 1634-1645
- **TRAJNEROWICZ, A.** ; **PAWLUCZYK, J.** ; **SCHWAIGHOFER, A.** ; **LENDL, B.** The Next Generation of IR Spectroscopy: EC-QCL-Based Mid-IR Transmission Spectroscopy of Proteins with Balanced Detection.. *Anal. Chem.*, 2020, vol. 92 (14), 9901-9907
- **S. LÜDEKE** ; **M. PFEIFER** ; **P. FISCHER**. *J. Am. Chem. Soc.*, 2011, vol. 133, 5704-5707
- **M. BONMARIN** ; **J. HELBING**. A picosecond time-resolved vibrational circular dichroism spectrometer. *Opt. Lett*, 2008, vol. 33, 2086-2088
- **NAFIE, L. A.** Vibrational Optical Activity. John Wiley & Sons, Ltd, 2011
- **M. BONMARINAND** ; **J. HELBING**. *Opt. Lett.*, 2008, vol. 33, 2086